# EUROPÄISCHE PATENTSCHRIFT

(11) **EP 3 953 137 B1**
(45) Veröffentlichungstag und Bekanntmachung des Hinweises auf die Patenterteilung: **05.07.2023**
(21) Anmeldenummer: 20705313.3
(22) Anmeldetag: 10.02.2020
(51) Int. Cl.: B29C 45/14

(54) **WERKZEUG ZUM UMSPRITZEN UND/ODER HINTERSPRITZEN EINES GEBOGENEN GLASKÖRPERS SOWIE VERFAHREN ZUM UMSPRITZEN UND/ODER HINTERSPRITZEN EINES GEBOGENEN GLASKÖRPERS**
TOOL FOR OVER-MOULDING AND/OR BACK-MOULDING A CURVED GLASS BODY, AND METHOD FOR OVER-MOULDING AND/OR BACK-MOULDING A CURVED GLASS BODY
OUTIL POUR LE SURMOULAGE ET/OU L'INJECTION PAR L'ARRIÈRE SUR UN CORPS EN VERRE COURBE AINSI QUE PROCÉDÉ POUR LE SURMOULAGE ET/OU L'INJECTION PAR L'ARRIÈRE SUR UN CORPS EN VERRE COURBE

(30) Priorität: 11.04.2019 DE 102019205203
(43) Veröffentlichungstag der Anmeldung: 16.02.2022
(73) Patentinhaber: VOLKSWAGEN AKTIENGESELLSCHAFT, 38440 Wolfsburg (DE)
(72) Erfinder: STRUBE, Maik, 38533 Eickhorst (DE); WACHENSCHWAN, Volker, 38170 Schöppenstedt (DE); SCHÜTZ, Christine, 38108 Braunschweig (DE); DEWALD, Wilma, 38106 Braunschweig (DE)
(86) Internationale Anmeldenummer: PCT/EP2020/053247
(87) Internationale Veröffentlichungsnummer: WO 2020/207640

(56) Entgegenhaltungen:
- EP-A1- 3 338 987
- JP-A- H08 267 504

## Beschreibung

Die Erfindung betrifft ein Werkzeug zum Umspritzen und/oder Hinterspritzen eines gebogenen Glaskörpers sowie ein Verfahren zum Umspritzen und/oder Hinterspritzen eines gebogenen Glaskörpers.

3D-freigeformte Glaskörper werden im zukünftigen Interieur von Fahrzeugen eine immer größere Rolle spielen. Sie bieten vor allem eine sehr hohe Kratz- und Chemikalienbeständigkeit, sind sehr gut beschichtbar bzw. funktionalisierbar und können in Elementen wie Displays, Schaltern und Lichtelementen integriert werden.

Um Bauteile mit Glasoberflächen in großserienfähigen Prozessen fertigen zu können, sind Verfahren notwendig, die in geringer Zykluszeit das Glas mit entsprechenden Anbindungselementen verbinden. Das Hinter- beziehungsweise Umspritzen von Glas mit Kunststoff stellt dabei eine kostengünstige und effektive Alternative zum Verkleben dar.

Allerdings ist die Abbildungsgenauigkeit von 3D-geformten Gläsern großtechnisch nicht in der Genauigkeit darstellbar, um ein komplettes Anschmiegen an eine Spritzgusswerkzeugkontur zu gewährleisten. Es entstehen im Stand der Technik Hohlräume zwischen dem Glaskörper und dem Werkzeug, in das der Glaskörper eingelegt wird. Sobald die Kunststoffschmelze, im Normalfall mit sehr hohen Drücken, auf das Glas trifft, kommt es zum Bruch, wenn punktuell Druckspitzen auftreten. Dies ist insbesondere der Fall bei flächigen Formabweichungen und anderen Biegeradien als im Werkzeug vorgesehen. Ein Werkstück, das einachsig mit einem festgelegten Biegeradius gebogen ist, wird eine Hohllage haben, wenn der Radius zu klein ist. Ist er hingegen zu groß, liegt der Schenkel des gebogenen Stückes nicht mehr am Werkzeug an, wenn die konkave Seite am Werkzeug anliegt. Der Effekt ist umso größer, je größer der Abstand der Biegeachse und des Rands des Werkzeugs ist.

Die EP 3 338 987 A1 offenbart ein Formwerkzeug zum Verformen und Hinterspritzen einer biegbaren Platte.

Die JP H08267 504 A betrifft ein Herstellungsverfahren eines umspritzten Gegenstandes.

Aufgabe der vorliegenden Erfindung ist es, ein Werkzeug sowie ein Verfahren zum Umspritzen und/oder Hinterspritzen eines gebogenen Glaskörpers zur Verfügung zu stellen, mittels derer das Umspritzen beziehungsweise Hinterspritzen des gebogenen Glaskörpers vereinfacht wird, wobei ein Bruch des Glaskörpers vermieden werden kann und daher Kosten eingespart werden können.

Gelöst wird die oben genannte Aufgabe durch ein Werkzeug zum Umspritzen und/oder Hinterspritzen eines gebogenen Glaskörpers, das eine erste Oberfläche zum Auflegen des gebogenen Glaskörpers aufweist. Das Werkzeug ist insbesondere zum Herstellen eines hybriden Bauteils umfassend den gebogenen Glaskörper und vorzugsweise Anbindungselementen ausgebildet. Insbesondere handelt es sich bei dem hybriden Bauteil um ein hybrides Bauteil für ein Fahrzeug, insbesondere ein Kraftfahrzeug. Das Werkzeug umfasst eine Vielzahl von Stiften. Die Stifte weisen an einem ersten Ende jeweils eine erste Stirnfläche auf, wobei zumindest ein Abschnitt der ersten Oberfläche des Werkzeuges durch die ersten Stirnflächen der Stifte gebildet ist. Die Stifte sind dabei entlang ihrer Längsrichtung verfahrbar gelagert, sodass zumindest der Abschnitt der ersten Oberfläche an eine Kontur des gebogenen Glaskörpers anpassbar ist. Durch die Anpassbarkeit werden die Toleranzen des Glaskörpers ausgeglichen und somit Glasbruch vermieden.

Bei dem Glaskörper handelt es sich insbesondere um einen dreidimensionalen Glaskörper, insbesondere einen 3D-freigeformten Glaskörper. Der Glaskörper ist nicht biegbar ausgebildet. Der Glaskörper weist insbesondere eine vorzugsweise konstante Dicke von 0,1 mm bis 7 mm, insbesondere von 0,3 mm bis 4 mm, am meisten bevorzugt zwischen 0,7 mm und 2 mm, auf. Insbesondere ist der Glaskörper aus Kalk-Natron-Glas, Aluminosilikatglas, Borosilikatglas oder Lithium-Aluminiumsilikatglas, vorzugsweise ungehärtet oder chemisch gehärtet, und/oder Verbundglas gebildet.

Der gebogene Glaskörper weist insbesondere mindestens eine Biegung auf. Der Abschnitt der ersten Oberfläche des Werkzeuges ist insbesondere einem Abschnitt des Glaskörpers mit einer Biegung zugeordnet. In anderen Worten wird der gebogene Glaskörper derart auf die erste Oberfläche aufgelegt, dass mindestens eine Biegung im ersten Abschnitt der ersten Oberfläche angeordnet ist. Unter dem Begriff "Kontur" des gebogenen Glaskörpers ist insbesondere eine Form der Oberfläche des gebogenen Glaskörpers gemeint, die dem ersten Abschnitt zugewandt ist. In anderen Worten kann sich somit die Form der Oberfläche des Werkzeuges im Abschnitt an die Form der Oberfläche des gebogenen Glaskörpers anpassen und diese insbesondere passgenau nachbilden.

Die Stifte erstrecken sich insbesondere in Längsrichtung von einem ersten Ende zu einem zweiten Ende. Am ersten Ende ist die erste Stirnfläche angeordnet. Die ersten Stirnflächen zusammen bilden vorteilhafterweise eine Oberfläche, die den Abschnitt der ersten Oberfläche bildet. Vorteilhafterweise sind die Stifte entlang deren Längsrichtung derart verfahrbar, dass sich deren Position an die Kontur eines Glaskörpers anpasst, und zwar derart, dass die erste Stirnfläche jedes Stiftes auf der Oberfläche des Glaskörpers anliegt.

Dadurch, dass die Stifte verfahrbar gelagert sind und somit der Abschnitt der ersten Oberfläche an eine Kontur eines eingelegten, gebogenen Glaskörpers anpassbar ist, ist das Werkzeug dazu ausgebildet, sich an komplexe Glasgeometrien, insbesondere auch an nicht bekannte Konturen, eines gebogenen Glaskörpers anzupassen. Insbesondere weist das Werkzeug somit eine formflexible Werkzeugoberfläche auf, die sich an die Kontur eines gebogenen Glaskörpers passgenau angleichen kann. Dadurch werden Hohlräume vermieden und somit auch Druckspitzen beim Umspritzen und/oder Hinterspritzen des gebogenen Glaskörpers. Insgesamt wird somit ein Bruch des Glaskörpers vermieden, wobei erhebliche Kosten eingespart werden.

Die Wahl der Größe der Stifte ist abhängig von den Toleranzen des Glaskörpers sowie der Komplexität der Glaskontur. Bevorzugt handelt es sich bei den Stiften um 4-Kantstifte. Die Stifte können eine Breite, die höchstens 10 mm, insbesondere höchstens 8 mm, ferner bevorzugt höchstens 6 mm, beträgt, aufweisen. Die Breite ist als eine Dimension in einer Richtung senkrecht zur Längsrichtung der Stifte zu verstehen. Ferner können beide Dimensionen in beide Richtungen senkrecht zur Längsrichtung eine oben genannte Breite aufweisen. Insbesondere können die Stifte einen quadratischen Querschnitt aufweisen, sodass sie in zwei Dimensionen senkrecht zur Längsrichtung die oben genannte Breite aufweisen.

Durch die besonders kleine Ausführung der Stifte ist eine bessere Anpassbarkeit und Nachbildbarkeit des gebogenen Glaskörpers im Abschnitt der ersten Oberfläche gewährleistet. In anderen Worten können sich die Stifte durch deren Verfahrbarkeit passgenau an die Kontur des Glaskörpers anschmiegen, sodass Hohlräume während eines Spritzgussverfahrens vermieden werden. Erfindungsgemäß lassen sich die Stifte entlang ihrer Längsrichtung derart verfahren, dass die durch deren ersten Stirnflächen gebildete Oberfläche eine bündige gebogene Oberfläche bildet, die insbesondere die Kontur des gebogenen Glaskörpers im Abschnitt nachbildet. Dazu sind die Stifte erfindungsgemäß in Reihen und Spalten aneinandergereiht angeordnet. Insbesondere sind die Stifte parallel zueinander angeordnet, wobei deren Längsrichtung insbesondere einer Tiefenrichtung des Werkzeuges entspricht.

Vorteilhafterweise sind die Stifte mittels Federn und/oder Luftpolstern gelagert. Insbesondere sind die Stifte jeweils mittels einer Feder und/oder eines Luftpolsters an deren zweiten Enden gelagert. Durch diese Lagerung sind sie entsprechend in Längsrichtung verfahrbar ausgebildet. Insbesondere können die Federn vorgespannt sein. Insbesondere sind die Federn um mindestens 0,5 mm, ferner bevorzugt mindestens 1 mm, am meisten bevorzugt um etwa 2 mm, vorgespannt.

Vorteilhafterweise sind die Stifte arretierbar, sodass die Stifte in einem an die Kontur des Glaskörpers angepassten Zustand während eines Spritzgussverfahrens zum Umspritzen und/oder Hinterspritzen als, insbesondere starre, Stütze des Glaskörpers dienen können. In anderen Worten sind die Stifte feststellbar, sodass kein Verfahren in Längsrichtung mehr möglich ist. Die Stifte geben nach einem Arretieren nicht mehr in Längsrichtung nach. Der Glaskörper kann somit schlüssig und fest gestützt werden, insbesondere während eines Spritzgussverfahrens, sodass Brüche des Glaskörpers vermieden werden.

Vorteilhafterweise sind die Stifte mittels seitlicher Verspannung arretierbar. Dafür weist das Werkzeug insbesondere in mindestens eine Richtung senkrecht zur Längsrichtung, insbesondere in beide Richtungen senkrecht zur Längsrichtung, der Stifte eine Spannvorrichtung auf. Die Spannvorrichtung weist mindestens eine Spannschraube auf, die einen Kolben in seitlicher Richtung gegen die Stifte pressen kann.

Das Werkzeug ist vorteilhaferweise gefräst, insbesondere aus Stahl.

In einem weiteren Aspekt bezieht sich die Erfindung auf ein Verfahren zum Umspritzen und/oder Hinterspritzen eines gebogenen Glaskörpers, wobei das Verfahren ein Positionieren des gebogenen Glaskörpers auf der ersten Oberfläche des Werkzeugs umfasst, wobei zumindest ein Abschnitt der ersten Oberfläche durch Stirnflächen von Stiften des Werkzeuges gebildet wird. Die Positionierung erfolgt insbesondere mittels einer Aufnahmeeinrichtung. Zur temporären Fixierung des Glaskörpers an der Werkzeugoberfläche kann im Werkzeug ein Unterdruck beaufschlagt werden.

Insbesondere wird der Abschnitt der ersten Oberfläche an eine Kontur des Glaskörpers angepasst. Und zwar wird eine Position der Stifte entlang deren Längsrichtung durch Verfahren der Stifte angepasst, sodass die erste Oberfläche zumindest in dem Abschnitt einer Kontur des Glaskörpers entspricht. Das Anpassen kann insbesondere mechanisch erfolgen, insbesondere durch die in Längsrichtung verfahrbare Lagerung der Stifte, vor allem mittels Federn und/oder Luftpolstern. Durch die verfahrbare Lagerung der Stifte, und insbesondere eine Vorspannung der Federn, erfolgt die Anpassung an die Kontur automatisch, sodass nicht jeder einzelne Stift manuell ausgerichtet werden muss. Dies macht das Verfahren wesentlich effektiver.

Ferner umfasst das Verfahren ein Spritzgussverfahren zum Umspritzen und/oder Hinterspritzen des Glaskörpers. Ferner setzt das Spritzgussverfahren insbesondere eine Temperatur von mindestens 150 C, ferner bevorzugt mindestens 175°C, am meisten bevorzugt mindestens 200°C, der Kunststoffschmelze ein. Mittels des Spritzgussverfahrens wird insbesondere ein fließfähiges Material, insbesondere umfassend oder bestehend aus einem Kunststoffmaterial (in anderen Worten eine Kunststoffschmelze), mit der oben genannten Temperatur eingebracht. Bei dem fließfähigen Material handelt es sich insbesondere um ein thermoplastisches Elastomer. Insbesondere weist dieses 10 % bis 50 % Glasfaserverstärkung auf. Um prozessbedingte Druckspitzen zu vermeiden, kann die Kunststoffschmelze mit einer gewissen Gasbeladung versehen werden, insbesondere mittels eines chemischen oder physikalischen Treibmittels. Das Umspritzen und/oder Hinterspritzen dient insbesondere zum Verbinden des Glaskörpers mit Anbindungselementen.

Insbesondere werden die Stifte nach dem Anpassen an die Kontur des Glaskörpers und vor dem Durchführen des Spritzgussverfahrens arretiert, sodass die Stifte während des Spritzgussverfahrens zum Umspritzen und/oder Hinterspritzen des Glaskörpers als Stütze des Glaskörpers dienen. Dies erfolgt insbesondere mittels seitlicher Verspannung, die vorzugsweise mechanisch und/oder hydraulisch erfolgen kann.

Insbesondere kann das Verfahren eine Vorsortierung von zu umspritzenden und/oder hinterspritzenden Glaskörpern umfassen, wobei die Vorsortierung nach deren Kontur erfolgt, sodass eine chargenweise Anpassung an deren Kontur stattfinden kann. Insbesondere kann eine Anpassung an die Kontur derart gesteuert werden, dass diese bei jedem Zyklus und/oder beim Wechsel der Charge erfolgt.

Insbesondere ist das Verfahren zum Herstellen eines hybriden Bauteiles, insbesondere für ein Fahrzeug, ausgebildet, das den gebogenen Glaskörper umfasst. Insbesondere wird das Verfahren mittels eines oben beschriebenen Werkzeuges durchgeführt.

Insbesondere ist das Werkzeug zum Durchführen eines erfindungsgemäßen Verfahrens ausgebildet.

### Kurze Beschreibung der Zeichnungen

Die Erfindung wird anhand der folgenden rein schematischen Figuren näher erläutert.

Die Figuren zeigen:
- Figur 1: eine perspektivische Ansicht eines erfindungsgemäßen Werkzeuges;
- Figur 2: eine perspektivische Ansicht der Stifte des Werkzeuges der Figur 1;
- Figur 3: eine Draufsicht auf das erfindungsgemäße Werkzeug der Figur 1;
- Figur 4: eine Schnittdarstellung entlang der Linie A-A der Figur 3; und
- Figur 5: ein Verfahrensschema eines erfindungsgemäßen Verfahrens.

### Ausführungsformen der Erfindung

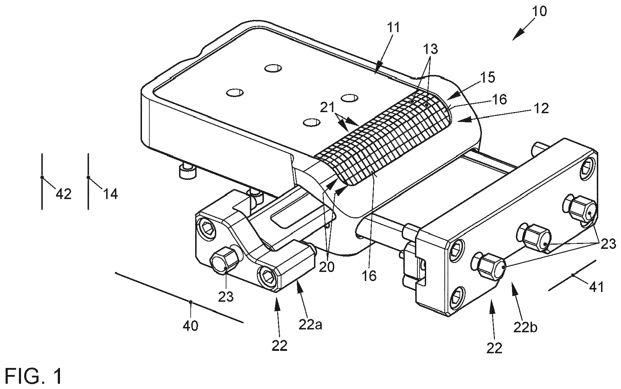

Figur 1 stellt eine perspektivische Ansicht eines erfindungsgemäßen Werkzeuges 10 dar. Das Werkzeug 10 weist eine erste Oberfläche 11 zum Auflegen eines gebogenen, in der Zeichnung nicht dargestellten, Glaskörpers auf, der umspritzt und/oder hinterspritzt werden soll. Ferner umfasst das Werkzeug 10 eine Vielzahl von Stiften 13. Jeder Stift 13 weist ein erstes Ende 15 und ein zweites Ende 18 auf, wobei in der Figur lediglich das erste Ende 15 mit dessen ersten Stirnfläche 16 zu sehen ist. Die Stifte 13 sind in Reihen 20 und Spalten aneinandergereiht angeordnet. Die ersten Stirnflächen 16 der Stifte 13 bilden eine Oberfläche 17, die einen Abschnitt 12 der ersten Oberfläche 11 des Werkezuges 10 bildet. Die Stifte 13 sind derart angeordnet, dass deren Längsrichtung 14 der Tiefenrichtung 42 des Werkzeuges 10 entspricht. Ferner weist das Werkzeug 10 eine Längsrichtung 40 und eine Breitenrichtung 41 auf.

Die Stifte 13 sind in Längsrichtung 14 verfahrbar, sodass sich deren erste Stirnflächen 16 an eine Kontur eines auf die erste Oberfläche 11 gelegten Glaskörpers anpassen können. Um die Stifte 13 in einem an die Kontur angepassten Zustand zu arretieren, sind diese mittels Spannvorrichtungen 22 spannbar. Die Spannvorrichtungen 22 weisen jeweils mindestens eine Spannschraube 23 auf. Im Detail weist das Werkzeug 10 eine erste Spannvorrichtung 22a auf, die die Stifte 13 in Breitenrichtung 41 des Werkzeuges 10 arretiert, und eine zweite Spannvorrichtung 22b, die die Stifte 13 in eine Längsrichtung 40 des Werkzeuges 10 arretiert.

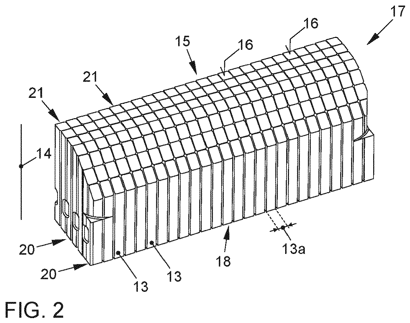

Figur 2 zeigt eine perspektivische Ansicht der Stifte 13 des Werkzeuges 10 der Figur 1. Die Stifte 13 erstrecken sich in Längsrichtung 14 von deren ersten Ende 15 bis zum zweiten Ende 18. Am ersten Ende 15 weist jeder Stift 13 die erste Stirnfläche 16 auf. Ferner ist in Figur 2 eine Breite 13a der Stifte 13 zu sehen.

Die Stifte 13 sind in Längsrichtung 14 verfahrbar, sodass sich deren Position derart an die Kontur eines Glaskörpers anpassen kann, dass die erste Stirnfläche 16 jedes Stiftes 13 auf der Oberfläche des Glaskörpers anliegt. Die Stifte 13 sind somit dazu ausgebildet, eine bündige, gebogene Oberfläche 17 zu bilden, deren Kontur an die Kontur des gebogenen Glaskörpers angepasst ist. Insgesamt sind die Stifte 13 in sieben Reihen 20 und 26 Spalten 21 angeordnet.

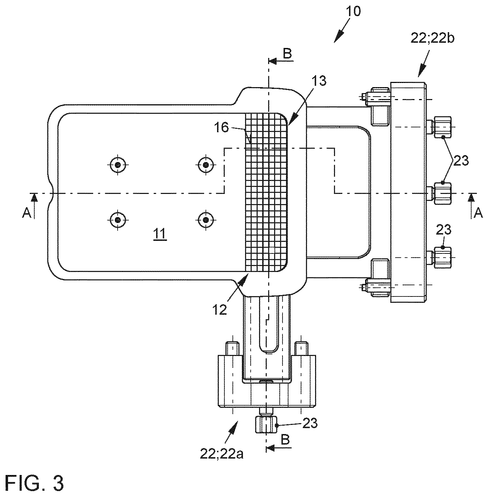

Figur 3 zeigt eine Draufsicht auf das erfindungsgemäße Werkzeug 10 der Figur 1. Deutlich ist zu sehen, wie die ersten Stirnflächen 16 der Stifte 13 einen Abschnitt 12 der ersten Oberfläche 11 des Werkzeuges 10 bilden. Der Abschnitt 12 ist insbesondere einem gebogenen Abschnitt des gebogenen Glaskörpers zugeordnet, der auf die erste Oberfläche 11 gelegt wird oder ist.

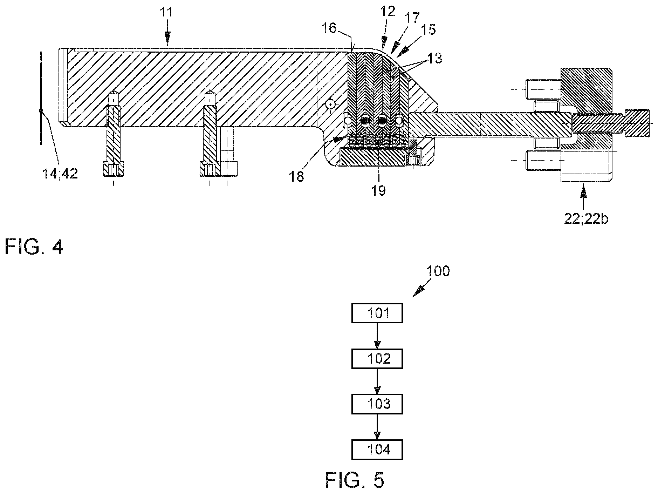

Figur 4 stellt eine Schnittdarstellung entlang der Linie A-A der Figur 3 dar. Deutlich ist zu sehen, wie sich die Stifte 13 in Längsrichtung 14 von ihrem zweiten Ende 18 bis zu dem ersten Ende 15 erstrecken. An dem zweiten Ende 18 ist jeweils eine Feder 19 angeordnet, die vorgespannt ist und somit dazu dient, die Stifte 13 verfahrbar auszubilden, sodass sich deren Position an die Kontur eines aufgelegten Glaskörpers anpassen kann.

In Figur 5 ist ein Verfahrensschema eines erfindungsgemäßen Verfahrens 100 zum Umspritzen und/oder Hinterspritzen eines gebogenen Glaskörpers dargestellt. Das Verfahren 100 umfasst das Positionieren 101 des gebogenen Glaskörpers auf einer ersten Oberfläche 11 des Werkzeuges 10. Zumindest ein Abschnitt 12 der ersten Oberfläche 11 wird dabei durch die Stirnflächen 16 von Stiften 13 des Werkzeuges 10 gebildet. Zur temporären Fixierung des Glaskörpers an der Werkzeugoberfläche kann im Werkzeug ein Unterdruck beaufschlagt werden.

Ferner umfasst das Verfahren 100 das Anpassen 102 des Abschnittes 12 an eine Kontur des Glaskörpers. Es werden dafür die Position der Stifte 13 durch Verfahren der Stifte 13 entlang deren Längsrichtung 14 angepasst, sodass die erste Oberfläche 11 zumindest in dem Abschnitt 12 einer Kontur des Glaskörpers entspricht.

Das Verfahren 100 umfasst zudem ein Spritzgussverfahren 104 zum Umspritzen und/oder Hinterspritzen des Glaskörpers. Bei dem Spritzgussverfahren 104 kann das Werkzeug 10 geschlossen und eine fließfähige Formmasse, welche ein Kunststoffmaterial ist (in anderen Worten eine Kunststoffschmelze), eingespritzt werden, so dass sich die Formmasse in dem durch das Schließen des Werkstoffes gebildeten Freiraum verteilt und den Freiraum vollständig ausfüllt, um den Glaskörper zumindest teilweise mit der Masse zu beschichten. Um prozessbedingte Druckspitzen zu vermeiden kann die Kunststoffschmelze mit einer gewissen Gasbeladung versehen werden, insbesondere mittels eines chemischen oder physikalischen Treibmittels.

So kann ein hybrides Bauteil hergestellt werden, das den gebogenen Glaskörper umfasst. Ferner kann das Verfahren das Arretieren 103 der Stifte 13 umfassen, nachdem deren Position an die Kontur des Glaskörpers angepasst sind, sodass die Stifte 13 während des Spritzgussverfahrens 104 als Stütze des Glaskörpers dienen können und somit einen Bruch des Glaskörpers vermeiden.

### Bezugszeichenliste

- 10: Werkzeug
- 11: erste Oberfläche
- 12: Abschnitt des ersten Oberfläche
- 13: Stift
- 13a: Breite
- 14: Längsrichtung der Stifte
- 15: erstes Ende
- 16: erste Stirnfläche
- 17: Oberfläche
- 18: zweites Ende
- 19: Feder
- 20: Reihe
- 21: Spalte
- 22: Spannvorrichtung
- 22a: erste Spannvorrichtung
- 22b: zweite Spannvorrichtung
- 23: Spannschraube

- 40: Längsrichtung des Werkzeuges
- 41: Breitenrichtung des Werkzeuges
- 42: Tiefenrichtung des Werkzeuges

- 100: Verfahren
- 101: Positionieren des gebogenen Glaskörpers auf einer ersten Oberfläche eines Werkzeuges
- 102: Anpassen des Abschnittes an eine Kontur des Glaskörpers
- 103: Arretieren der Stifte
- 104: Spitzgussverfahren zum Umspritzen und/oder Hinterspritzen des Glaskörpers

## Patentansprüche

1. Werkzeug (10) zum Umspritzen und/oder Hinterspritzen eines gebogenen Glaskörpers, wobei das Werkzeug (10) eine erste Oberfläche (11) zum Auflegen des gebogenen Glaskörpers aufweist,
wobei
das Werkzeug (10) eine Vielzahl von Stiften (13) umfasst,
wobei die Stifte (13) jeweils eine erste Stirnfläche (16) an einem ersten Ende (15) der Stifte (13) aufweisen,
wobei zumindest ein Abschnitt (12) der ersten Oberfläche (11) durch die ersten Stirnflächen (16) der Stifte (13) gebildet ist,
wobei die Stifte (13) entlang ihrer Längsrichtung (14) verfahrbar gelagert sind,
sodass zumindest der Abschnitt (12) der ersten Oberfläche (11) an eine Kontur des gebogenen Glaskörpers anpassbar ist,
**dadurch gekennzeichnet, dass**
die Stifte (13) in Reihen (20) und Spalten (21) aneinandergereiht angeordnet sind, sodass deren ersten Stirnflächen (16) bei entsprechender Position in Längsrichtung (14) eine bündige gebogene Oberfläche (17) bilden.

2. Werkzeug (10) nach Anspruch 1,
**dadurch gekennzeichnet, dass**
die Stifte (13) eine Breite (13a) aufweisen, die höchstens 10 mm beträgt.

3. Werkzeug (10) nach einem der vorherigen Ansprüche,
**dadurch gekennzeichnet, dass**
die Stifte (13) ein zweites Ende (18) aufweisen,
wobei die Stifte (13) an deren zweiten Enden (18) mittels Federn (19) und/oder Luftpolstern gelagert sind.

4. Werkzeug (10) nach einem der vorherigen Ansprüche,
**dadurch gekennzeichnet, dass**
die Stifte (13) arretierbar sind,
sodass die Stifte (13) in einem an die Kontur des Glaskörpers angepassten Zustand während eines Spitzgussverfahrens zum Umspritzen und/oder Hinterspritzen des Glaskörpers als Stütze des Glaskörpers dienen können.

5. Werkzeug (10) nach Anspruch 4,
**dadurch gekennzeichnet, dass**
die Stifte (13) mittels seitlicher Verspannung arretierbar sind.

6. Verfahren (100) zum Umspritzen und/oder Hinterspritzen eines gebogenen Glaskörpers,
**dadurch gekennzeichnet, dass**
das Verfahren (100) die folgenden Schritte umfasst:
• Positionieren des gebogenen Glaskörpers auf einer ersten Oberfläche (11) eines Werkzeuges (10), nach Ansprüch 1 wobei zumindest ein Abschnitt (12) der ersten Oberfläche (11) durch Stirnflächen (16) von Stiften (13) des Werkzeuges (10) gebildet ist,
• Anpassen (102) des Abschnittes (12) an eine Kontur des Glaskörpers durch Verfahren der Stifte (13) entlang deren Längsrichtung (14), und
• Durchführen eines Spitzgussverfahrens (104) zum Umspritzen und/oder Hinterspritzen des Glaskörpers.

7. Verfahren (100) nach Anspruch 6,
**dadurch gekennzeichnet, dass**
das Anpassen (102) mechanisch erfolgt.

8. Verfahren (100) nach einem der Ansprüche 6 oder 7,
**dadurch gekennzeichnet, dass**
die Stifte (13) nach dem Anpassen an die Kontur des Glaskörpers arretiert werden (103),
sodass die Stifte (13) während des Spitzgussverfahrens (104) zum Umspritzen und/oder Hintersitzen des Glaskörpers als Stütze des Glaskörpers dienen.

## Claims

1. Tool (10) for overmolding and/or back-molding a curved glass body,
the tool (10) having a first surface (11) for placing the curved glass body,
the tool (10) comprising a plurality of pins (13),
the pins (13) each having a first end face (16) at a first end (15) of the pins (13),
at least a portion (12) of the first surface (11) being formed by the first end faces (16) of the pins (13),
the pins (13) being mounted displaceably along their longitudinal direction (14),
so that at least the portion (12) of the first surface (11) is adaptable to a contour of the curved glass body,
**characterized in that**
the pins (13) are arranged so as to be lined up in rows (20) and columns (21),
so that the first end faces (16) thereof form a flush curved surface (17) in a corresponding position in the longitudinal direction (14).

2. Tool (10) according to claim 1,
**characterized in that**
the pins (13) have a width (13a) that is at most 10 mm.

3. Tool (10) according to either of the preceding claims,
**characterized in that**
the pins (13) have a second end (18),
the pins (13) being mounted at their second ends (18) by means of springs (19) and/or air cushions.

4. Tool (10) according to any of the preceding claims,
**characterized in that**
the pins (13) are lockable,
so that the pins (13) can serve as a support for the glass body in a state adapted to the contour of the glass body during an injection-molding process for overmolding and/or back-molding the glass body.

5. Tool (10) according to claim 4,
**characterized in that**
the pins (13) are lockable by means of lateral clamping.

6. Method (100) for overmolding and/or back-molding a curved glass body,
**characterized in that**
the method (100) comprises the steps of:
• positioning the curved glass body on a first surface (11) of a tool (10) according to claim 1,
at least one portion (12) of the first surface (11) being formed by end faces (16) of pins (13) of the tool (10),
• adapting (102) the portion (12) to a contour of the glass body by moving the pins (13) along their longitudinal direction (14), and
• performing an injection-molding process (104) for overmolding and/or back-molding the glass body.

7. Method (100) according to claim 6,
**characterized in that**
the adaptation (102) is mechanically performed.

8. Method (100) according to either of claims 6 or 7,
**characterized in that**
the pins (13) are locked (103) after adaptation to the contour of the glass body,
so that the pins (13) serve as a support for the glass body during the injection-molding process (104) for overmolding and/or back-molding the glass body.

## Revendications

1. Outil (10) pour le surmoulage et/ou l'injection arrière d'un corps en verre cintré,
dans lequel l'outil (10) présente une première surface (11) pour poser le corps en verre cintré,
dans lequel
l'outil (10) comprend une pluralité de tiges (13),
dans lequel les tiges (13) présentent respectivement une première face frontale (16) sur une première extrémité (15) des tiges (13),
dans lequel au moins une section (12) de la première surface (11) est formée par les premières faces frontales (16) des tiges (13),
dans lequel les tiges (13) sont montées mobiles le long de leur direction longitudinale (14),
de sorte qu'au moins la section (12) de la première surface (11) peut être adaptée à un contour du corps en verre cintré,
**caractérisé en ce que**
les tiges (13) sont agencées bout à bout en rangées (20) et colonnes (21),
de sorte que leurs premières faces frontales (16) forment une surface cintrée à fleur (17) dans la position correspondante dans la direction longitudinale (14).

2. Outil (10) selon la revendication 1,
**caractérisé en ce que**
les tiges (13) présentent une largeur (13a), qui est d'au plus 10 mm.

3. Outil (10) selon l'une quelconque des revendications précédentes,
**caractérisé en ce que**
les tiges (13) présentent une seconde extrémité (18),
dans lequel les tiges (13) sont montées au niveau de leurs secondes extrémités (18) au moyen de ressorts (19) et/ou de coussins d'air.

4. Outil (10) selon l'une quelconque des revendications précédentes,
**caractérisé en ce que**
les tiges (13) peuvent être bloquées,
de sorte que les tiges (13) peuvent servir, dans un état adapté au contour du corps en verre pendant un procédé de moulage par injection pour le surmoulage et/ou l'injection arrière du corps en verre, d'appui du corps en verre.

5. Outil (10) selon la revendication 4,
**caractérisé en ce que**
les tiges (13) peuvent être bloquées au moyen d'une tension latérale.

6. Procédé (100) pour le surmoulage et/ou l'injection arrière d'un corps en verre cintré,
**caractérisé en ce que**
le procédé (100) comprend les étapes suivantes :
• positionnement du corps en verre cintré sur une première surface (11) d'un outil (10), selon la revendication 1
dans lequel au moins une section (12) de la première surface (11) est formée par des faces frontales (16) de tiges (13) de l'outil (10),
• adaptation (102) de la section (12) à un contour du corps en verre par le déplacement de tiges (13) le long de leur direction longitudinale (14), et
• réalisation d'un procédé de moulage par injection (104) pour le surmoulage et/ou l'injection arrière du corps en verre.

7. Procédé (100) selon la revendication 6,
**caractérisé en ce que**
l'adaptation (102) est effectuée de manière mécanique.

8. Procédé (100) selon l'une des revendications 6 ou 7,
**caractérisé en ce que**
les tiges (13) sont bloquées après l'adaptation au contour du corps en verre (103),
de sorte que les tiges (13) servent, pendant le procédé de moulage par injection (104) pour le surmoulage et/ou l'injection arrière du corps en verre, d'appui du corps en verre.
